# FASCICULE DE BREVET EUROPEEN

(11) **EP 0 817 205 B1**
(45) Date de publication et mention de la délivrance du brevet: **22.08.2001**
(21) Numéro de dépôt: 97401498.7
(22) Date de dépôt: 26.06.1997
(51) Int. Cl.: G21C 17/01

(54) **Dispositif et procédé d'intervention sur une pompe primaire de réacteur nucléaire**
Einrichtung und Verfahren zum Eingriff in einer Hauptkühlmittelpumpe eines Kernreaktors
Installation and method for servicing a reactor coolant pump of a nuclear reactor

(30) Priorité: 27.06.1996 FR 9608023
(43) Date de publication de la demande: 07.01.1998
(73) Titulaire: JEUMONT INDUSTRIE, 92400 Courbevoie (FR)
(72) Inventeur: Zurecki, Bernard, 59132 Baive (FR); Boso, Laurent, 59600 Maubeuge (FR); Masson, Joel, 59600 Maubeuge (FR)
(74) Mandataire: Bentz, Jean-Paul

(56) Documents cités:
- EP-A- 0 097 795
- DE-A- 2 831 395
- US-A- 4 581 955
- PATENT ABSTRACTS OF JAPAN vol. 018, no. 519 (P-1807), 29 septembre 1994 & JP 06 180384 A (TOSHIBA CORP;OTHERS: 01), 28 juin 1994,
- PATENT ABSTRACTS OF JAPAN vol. 017, no. 332 (P-1562), 23 juin 1993 & JP 05 040188 A (TOSHIBA CORP;OTHERS: 01), 19 février 1993,
- PATENT ABSTRACTS OF JAPAN vol. 013, no. 377 (P-922), 22 août 1989 & JP 01 132961 A (TOSHIBA CORP), 25 mai 1989,

## Description

L'invention concerne le domaine des pompes primaires de réacteur nucléaire et plus particulièrement, les techniques de maintenance de telles pompes.

Une pompe primaire est classiquement à axe vertical, le moteur étant disposé au-dessus du corps de pompe, par l'intermédiaire d'un support. Le corps de pompe comporte notamment une volute dans laquelle peut tourner une roue à aubes. L'aspiration du fluide de refroidissement s'effectue par le bas de la pompe et suivant l'axe de cette dernière, son refoulement s'effectuant latéralement, radialement ou tangentiellement.

La volute est constituée de pièces massives, reliées généralement entre elles par des soudures.

Ces soudures constituent des zones de liaison qu'il convient donc de contrôler périodiquement.

Il est difficile d'accéder aux soudures par l'extérieur, du fait de la présence de pattes pour le positionnement et la fixation de la volute dans la casemate de la pompe. De plus, un calorifugeage est prévu sur la face extérieure de la volute.

L'invention a donc pour objet un dispositif et un procédé d'intervention sur une pompe primaire, facilitant l'inspection du corps de pompe pour la détection de défauts éventuels et leur réparation.

L'invention concerne un dispositif d'intervention sur la volute d'une pompe primaire, ladite volute présentant un axe de révolution et ledit dispositif d'intervention comprenant :
- une colonne de support de moyens de contrôle ou de réparation,
- des moyens de support et de positionnement de ladite colonne par rapport audit axe de révolution et
- des moyens pour déplacer ladite colonne sur son axe.

Les caractéristiques suivantes peuvent être considérées isolément ou selon toutes leurs combinaisons techniquement possibles :
- lesdits moyens de support et de positionnement comprennent trois tapes superposées, de diamètres décroissants et traversées par ladite colonne, deux tapes adjacentes étant montées en rotation l'une par rapport à l'autre selon deux axes décalés, l'axe de la colonne étant également décalé par rapport à ces deux axes de rotation.
- l'axe de la colonne est sensiblement perpendiculaire au plan desdits moyens de support et de positionnement,
- lesdits moyens de contrôle comprennent au moins un capteur pour la détection d'éventuels défauts,
- les moyens de contrôle comprennent également une unité assurant le positionnement d'au moins un capteur sur la surface interne de la volute, ainsi que sa rotation autour de l'axe de révolution de la volute,
- les moyens de contrôle ou de réparation comprennent un bras télémanipulateur, destiné à supporter et guider des outillages,
- les moyens de support et de positionnement constituent une protection biologique,
- les moyens de mise en rotation des tapes intermédiaire et supérieure sont constitués par un pignon, mis en mouvement par un moteur et venant en prise avec une couronne dentée associée à une tape,
- les moyens pour déplacer la colonne sur son axe sont constitués par un pignon, mis en mouvement par un moteur et venant en prise avec une crémaillère portée par la colonne.

L'invention concerne également un procédé d'intervention au moyen du dispositif précédent, sur la volute d'une pompe primaire, ladite pompe présentant un axe et la volute présentant un axe de révolution, ledit procédé consistant à :
- dégager l'accès à l'intérieur de la volute,
- positionner le dispositif d'intervention par rapport à l'axe de la pompe et à l'axe de révolution de la volute, la colonne pénétrant à l'intérieur de la volute et son axe coïncidant sensiblement avec l'axe de révolution de la volute,
- inspecter les soudures grâce aux moyens de contrôle portés par la colonne et
- en cas de défaut, à procéder aux réparations par l'intermédiaire des moyens portés par la colonne.

De façon avantageuse, l'inspection des soudures est réalisée en positionnant au moins un capteur en regard d'une soudure de la volute, puis en faisant tourner ledit capteur autour dudit axe de révolution de la volute.

De façon préférée, l'inspection des soudures est réalisée en deux étapes :
- on effectue tout d'abord un balayage relativement rapide de la soudure pour identifier les zones présentant des défauts et,
- on effectue ensuite, dans chacune des zones préalablement identifiées, un deuxième balayage à une vitesse relativement lente, pour identifier et caractériser les défauts.

L'invention sera mieux comprise et d'autres buts, avantages et caractéristiques de celle-ci apparaîtront plus clairement à la lecture de la description qui suit, faite au regard des dessins annexés qui représentent des exemples non limitatifs de réalisation de l'invention et sur lesquels :
- la figure 1 représente une vue schématique en coupe partielle d'une pompe primaire classique,
- la figure 2 est une vue en perspective et en coupe partielle d'un dispositif d'intervention et du corps de pompe,
- la figure 3 est une vue en coupe d'un dispositif d'intervention et de la partie supérieure du corps de pompe,
- la figure 4 est une vue schématique de dessus d'un dispositif d'intervention, lors de son positionnement sur le corps de pompe et
- la figure 5 est une vue en coupe du corps de pompe, un dispositif d'intervention étant partiellement représenté.

Les éléments communs aux différentes figures sont représentés par les mêmes références.

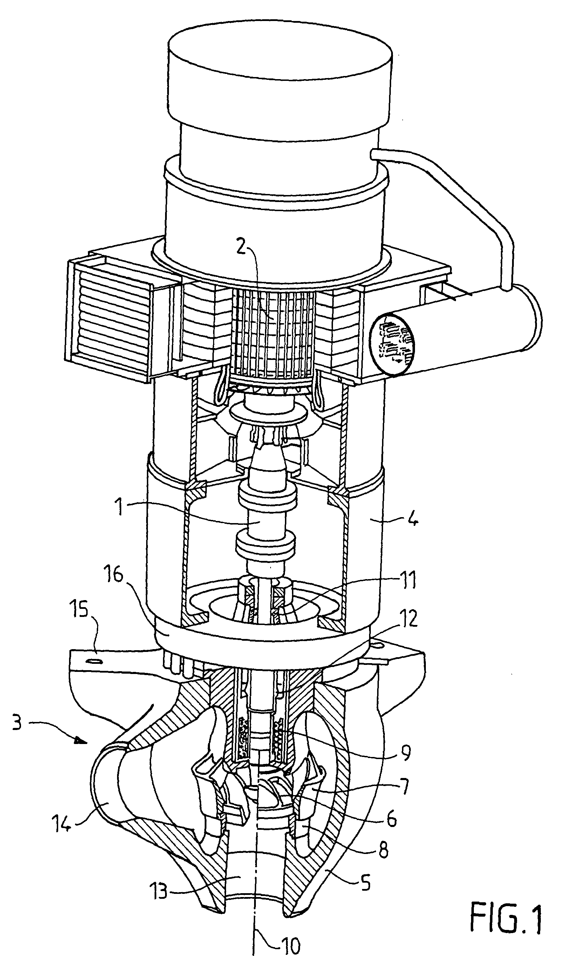

La pompe primaire représentée à la figure 1 comporte un arbre 1, à axe sensiblement vertical 10, qui est mis en mouvement par un moteur 2, disposé au-dessus du corps de pompe 3, par l'intermédiaire d'un support 4 et d'une bride principale 16.

Le corps de pompe 3 comprend essentiellement les éléments suivants :
- une partie hydraulique comportant une volute 5, une roue 6, un diffuseur 7 et un guide d'eau 8,
- une barrière thermique 9, un dispositif de joint d'arbre 11 et un palier 12.

Le corps de pompe 3 comporte une tubulure d'aspiration 13 et une tubulure de refoulement 14 pour le fluide de refroidissement.

La forme de la volute peut différer d'une pompe primaire à l'autre, notamment du fait de la présence d'un guide d'eau amovible ou non. Dans l'exemple illustré sur les figures, le refoulement du fluide de refroidissement s'effectue tangentiellement. Il peut également s'effectuer latéralement ou radialement.

L'invention n'est pas limitée au type particulier de volute représenté sur les figures.

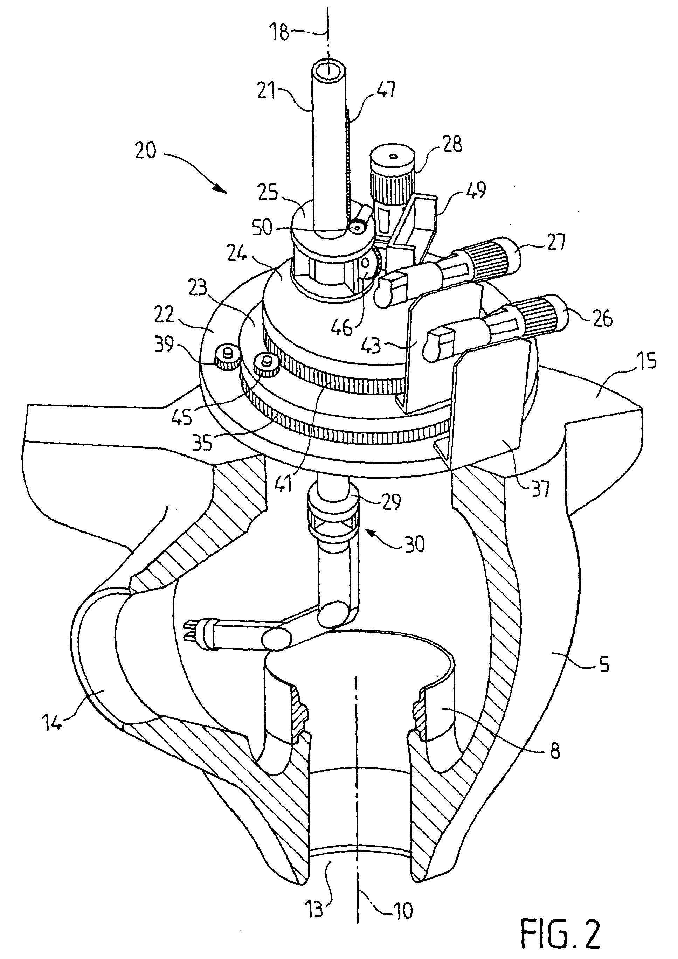

La figure 2 montre, de façon schématique, la position du dispositif d'intervention 20 par rapport à la volute 5.

Pour pouvoir procéder à la mise en place du dispositif d'intervention, il est tout d'abord nécessaire de retirer le moteur 2 ainsi que le support 4, représentés à la figure 1. Dans certains cas, il est également nécessaire de retirer la bride principale assurant la liaison entre le corps de pompe et le support moteur. Cette bride porte la référence 16 sur la figure 1. Ceci permet d'accéder à la face supérieure 15 de la volute. On extrait alors tous les éléments se trouvant à l'intérieur de la volute, notamment l'arbre 1 et la roue 6. Comme on le verra ultérieurement, le guide d'eau 8 doit, dans certains cas, être également retiré.

On place alors le dispositif d'intervention 20 sur la face supérieure 15 de la volute.

Le dispositif d'intervention comprend essentiellement les éléments suivants :
- trois tapes 22, 23 et 24 présentant sensiblement la forme de disques, de diamètres décroissants, les trois tapes étant superposées,
- une colonne 21, destinée à supporter, à sa partie inférieure 29, des moyens d'intervention 30 qui sont constitués, dans l'exemple de la figure 2, par un bras télémanipulateur et
- des moteurs 26, 27, 28, destinés à permettre la rotation des tapes intermédiaire et supérieure 23, 24, par rapport respectivement à la tape inférieure 22 et à la tape intermédiaire 23, ainsi que le mouvement selon un axe sensiblement vertical de la colonne 21.

Le bras télémanipulateur 30 illustré à la figure 2 peut porter un dispositif de contrôle ou encore des outils de réparation.

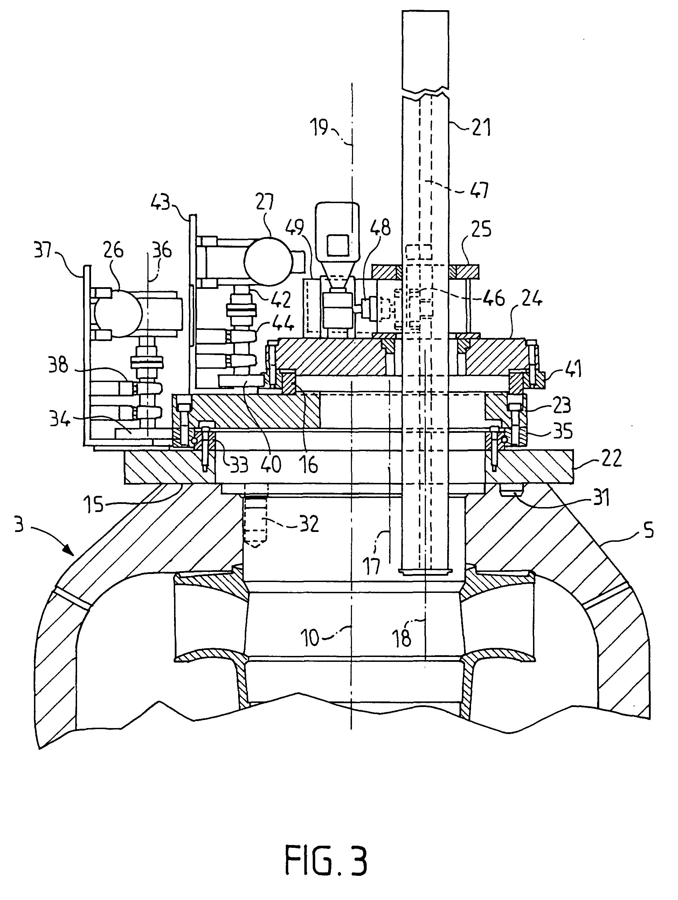

La figure 3 représente, de façon plus détaillée, le dispositif d'intervention.

Celui-ci est positionné par rapport à la volute 5, grâce à des pions 31 et 32 assurant le centrage et le calage angulaire du dispositif.

La tape inférieure 22 qui présente le diamètre le plus important, est placée au niveau de la face supérieure 15 de la volute. Elle est représentée selon un plan sensiblement horizontal sur la figure 3.

L'épaisseur de la tape inférieure est relativement importante pour pouvoir servir de protection biologique. Il en est de même pour les tapes intermédiaire 23 et supérieure 24 qui seront décrites ultérieurement.

La tape inférieure 22 est centrée sur l'alésage de la volute 5. Ainsi, son axe de symétrie 19 coïncide avec l'axe 10 de l'arbre 1.

La tape intermédiaire 23 présente un diamètre inférieur à celui de la tape inférieure 22. Elle est montée en rotation sur la tape inférieure par l'intermédiaire de moyens 33, fixés sur la tape inférieure 22. La tape intermédiaire 23 est également centrée sur l'axe 19 de la tape inférieure et sur l'axe 10 de l'arbre.

La tape intermédiaire 23 est entraînée en rotation par l'intermédiaire d'un pignon 34 qui vient en prise avec une couronne dentée 35, montée sur la tape intermédiaire.

Le pignon 34 est entraîné en rotation autour de l'axe 36, par l'intermédiaire du moteur 26 qui est fixé à la tape inférieure 22, par l'intermédiaire du support 37. Des paliers 38 peuvent être prévus pour le support et le guidage de l'arbre 36.

La référence 39 désigne un codeur qui permet de contrôler le déplacement de la tape intermédiaire 23 par rapport à la tape inférieure 22.

La tape supérieure 24 présente un diamètre inférieur à celui de la tape intermédiaire 23. Elle est montée en rotation sur la tape intermédiaire grâce à des moyens 16, fixés sur la tape intermédiaire 23. La tape supérieure est centrée sur son axe de rotation 17 qui est décalé par rapport à l'axe 19 des tapes inférieure et intermédiaire, cet axe 19 coïncidant avec l'axe 10 de l'arbre 1.

La tape supérieure 24 est entraînée en rotation par l'intermédiaire d'un pignon 40 qui vient en prise avec une couronne dentée 41, montée sur la tape supérieure.

Le pignon 40 est monté sur un arbre 42 parallèle à l'axe 19, mis en rotation par l'intermédiaire du moteur 27. Ce dernier est fixé sur la tape intermédiaire 23 par l'intermédiaire d'un support 43. Des paliers 44 peuvent être prévus pour supporter et guider l'arbre 42.

La référence 45 désigne un deuxième codeur qui sert à contrôler le déplacement de la tape supérieure 24 par rapport à la tape intermédiaire 23.

Sur la tape supérieure 24, est fixé un dispositif de support 25 de la colonne 21.

La colonne 21 est disposée selon un axe sensiblement vertical 18 et traverse l'empilement des trois tapes grâce à des alésages pratiqués dans celles-ci. L'axe 18 est décalé par rapport à l'axe 10 de l'arbre 1 et l'axe 17 de la tape supérieure 24. L'axe 18 est par ailleurs sensiblement perpendiculaire au plan des trois tapes.

La colonne 21 peut se déplacer selon l'axe 18 au moyen d'un pignon 46 qui vient en prise avec une crémaillère 47, portée par la colonne. Le pignon 46 est entraîné par le moteur 28, par l'intermédiaire de l'arbre 48 parallèle au plan des tapes. Le moteur 28 est fixé sur la tape supérieure 24, par l'intermédiaire du support 49.

La référence 46 désigne un codeur permettant de contrôler la position de la colonne 21 par rapport à la tape supérieure 24.

Les décalages existant entre l'axe des tapes inférieure et intermédiaire 22 et 23, l'axe de la tape supérieure 24 et l'axe de la colonne 21 permettent de placer la colonne 21 à l'intérieur de la volute 5 de telle façon que les moyens d'intervention qu'elle porte à son extrémité inférieure 29 peuvent être placés dans tout l'espace intérieur de la volute 5.

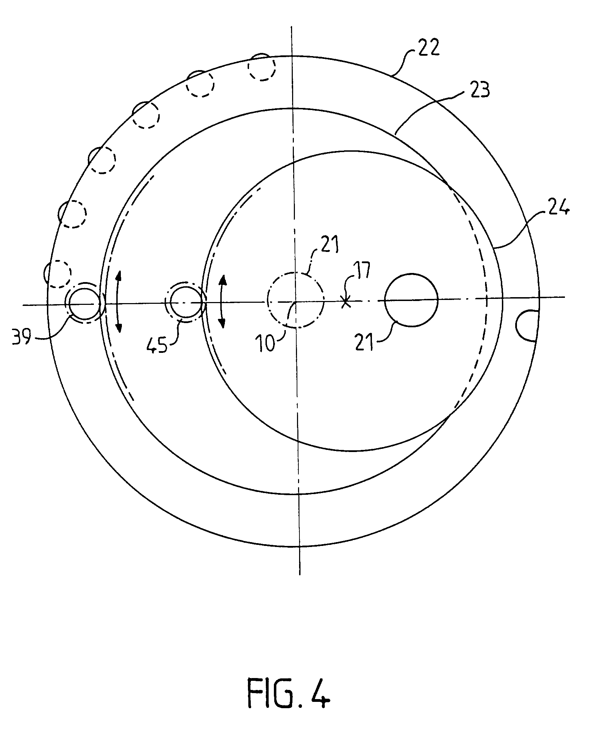

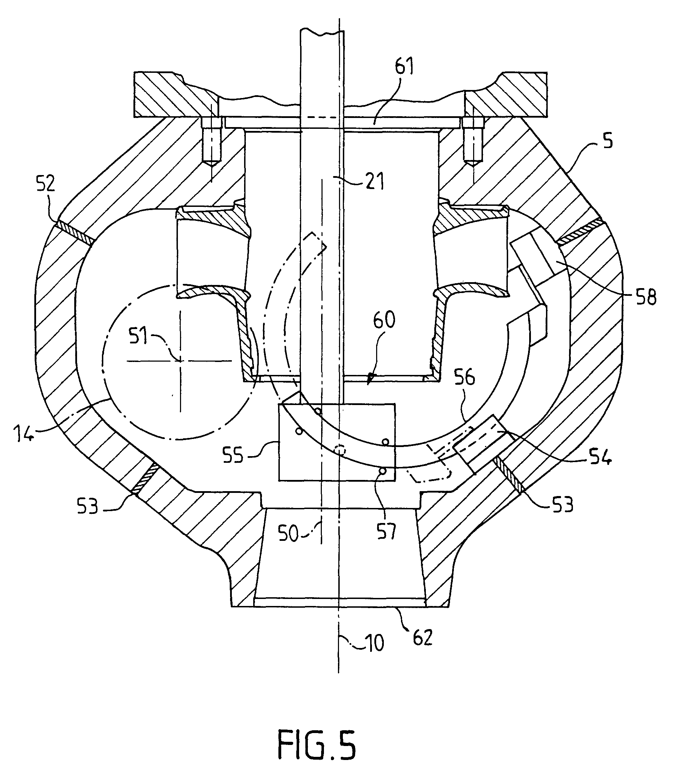

La figure 4 montre à titre d'exemple, comment les différents éléments du dispositif d'intervention sont positionnés par rapport aux axes de référence que sont : l'axe de révolution de la volute, l'axe 10 de l'arbre 1, l'axe 17 de la colonne 21 et l'axe de refoulement du fluide de refroidissement. L'axe de révolution de la volute et l'axe de refoulement sont représentés sur la figure 5, et portent les références 50, respectivement 51.

L'axe de la tape inférieure 22 et celui de la tape intermédiaire 23 coïncident avec l'axe 10 de l'arbre 1. Elles sont donc centrées sur l'axe des deux ouvertures 61, 62 de la volute 5.

Des détecteurs du type inductif permettent d'assurer le positionnement initial des tapes (calage), avant une intervention. Ils ne sont pas représentés sur les figures.

Les premier et deuxième codeurs 39 et 45 sont initiés de manière à effectuer les déplacements en rotation nécessaires à l'intervention prévue.

Sur l'exemple illustré à la figure 4, la position relative des trois tapes est telle que les premier et deuxième codeurs 39 et 45 ainsi que la colonne 21 sont centrés sur un diamètre de la tape inférieure 22, parallèle à l'axe de refoulement 51 de la volute 5.

Une procédure de réglage permet d'obtenir un positionnement différent de la colonne 21. Elle peut notamment être centrée sur l'axe 10 de l'arbre 1 comme illustré en pointillés sur la figure 4. Le choix du positionnement dépend de l'intervention prévue et des moyens de contrôle ou de réparation qui sont portés par la colonne.

La figure 5 montre un type de moyens d'intervention qui peut être monté sur la colonne 21. Ces moyens 60 permettent de détecter les défauts éventuels, au niveau des soudures 52 et 53.

Ces moyens d'intervention 60 sont ici constitués par un capteur 54, et une unité 55 portant des moyens de positionnement 56.

Les moyens de positionnement 56 présentent la forme d'un bras en arc de cercle. Ce bras 56 est mobile en rotation autour de son axe grâce à l'action de moyens moteurs portés par l'unité 55 qui ne sont pas illustrés sur la figure. Dans son mouvement, le bras 56 est guidé par des paliers 57.

Lorsque les moyens d'intervention sont introduits dans la volute, le bras 56 est replié le long de la colonne 21, comme illustré en pointillés sur la figure 5.

Un système de contrôle-commande de l'ensemble du dispositif agit sur les moyens moteurs du bras 56 pour faire tourner ce dernier et mettre le capteur 54 en regard de la soudure 53.

Lorsque ce positionnement est réalisé et que le capteur 54 se trouve dans la position illustrée à la figure 5, le système de contrôle-commande agit sur l'unité de commande pour qu'elle se mette en rotation grâce à des moyens non représentés sur la figure. La colonne 21 étant centrée sur l'axe 50 de révolution de la volute, le bras 56 tourne ainsi autour de l'axe 50. Ce mouvement de rotation permet au capteur 54 d'inspecter l'ensemble de la soudure 53, sur le contour de la volute.

La même opération peut être effectuée pour contrôler la soudure 52, en déplaçant le bras 56 de façon à le positionner en regard de la soudure 52.

Dans un autre mode de réalisation, on peut également prévoir un deuxième capteur 58, porté par le bras 56. L'écartement entre les deux capteurs 54 et 58 est alors choisi pour que le capteur 58 soit nécessairement en regard de la soudure 52, lorsque le capteur 54 est en regard de la soudure 53.

Ce mode de réalisation qui est illustré à la figure 5, permet d'inspecter simultanément les deux soudures de la volute 5.

Les signaux transmis par les capteurs 54, 58 sont stockés en vue d'une analyse ultérieure ou encore traités en temps réel.

Les capteurs 54 et 58 sont notamment constitués par des capteurs à ultra-sons. Ces capteurs permettent, en effet, d'effectuer des contrôles sur de grandes épaisseurs, ce qui est nécessaire dans le cas des soudures de volute.

Ce type de capteurs nécessite la présence d'un film d'eau entre la surface intérieure de la volute et le capteur.

Ceci peut être obtenu à l'aide, par exemple, d'un sabot avec un débit de fuite.

On peut également prévoir de remplir la volute avec de l'eau, les deux capteurs 54 et 58 étant alors immergés.

C'est pourquoi, il est préférable que l'unité 55 soit étanche.

L'analyse des signaux émis par les capteurs 54 et 58 permet de déterminer si des défauts existent au niveau des soudures 52 et 53.

De façon préférée, le contrôle s'effectue de la façon suivante, pour chaque soudure :
- on effectue tout d'abord un balayage relativement rapide de la soudure pour identifier les zones présentant des défauts,
- dans chacune de ces zones préalablement identifiées, on effectue ensuite un deuxième balayage à une vitesse relativement lente, permettant d'identifier et de caractériser les défauts.

Si des défauts ont été détectés, il convient d'intervenir de nouveau pour réparer les soudures.

Dans ce cas, on fixe, à l'extrémité inférieure de la colonne 21, un dispositif d'intervention pouvant supporter et guider des outillages de réparation. On peut ainsi utiliser le bras télémanipulateur 30 illustré à la figure 2.

Le système de contrôle-commande qui n'est pas illustré permet d'automatiser les différentes opérations qui viennent d'être décrites.

Le dispositif d'intervention peut également être utilisé pour contrôler et éventuellement réparer les tubulures d'aspiration et de refoulement.

Les signes de référence insérés après les caractéristiques techniques mentionnées dans les revendications ont pour seul but d'améliorer la compréhension de ces dernières et ne peuvent en aucun cas en limiter la portée.

## Revendications

1. Dispositif d'intervention sur la volute (5) d'une pompe primaire, ladite volute présentant un axe (50) de révolution et ledit dispositif comprenant :
- une colonne (21) de support de moyens de contrôle ou de réparation (30, 60),
- des moyens (22, 23, 24) de support et de positionnement de ladite colonne (21) par rapport audit axe (50) de révolution et
- des moyens (28, 46, 47) pour déplacer ladite colonne (21) sur son axe (18).

2. Dispositif conforme à la revendication 1, selon lequel lesdits moyens de support et de positionnement comprennent trois tapes (22, 23, 24) superposées , de diamètres décroissants et traversées par ladite colonne (21), deux tapes adjacentes étant montées en rotation l'une par rapport à l'autre selon deux axes (17, 19) décalés et l'axe (18) de la colonne (21) étant également décalé par rapport aux deux axes (17, 19) de rotation.

3. Dispositif conforme à la revendication 2, selon lequel l'axe (18) de ladite colonne (21) est sensiblement perpendiculaire au plan desdits moyens de support et de positionnement (22, 23, 24).

4. Dispositif conforme à l'une des revendications 1 à 3, selon lequel lesdits moyens de contrôle (60) comprennent au moins un capteur (54, 58) pour la détection d'éventuels défauts.

5. Dispositif conforme à la revendication 4, selon lequel lesdits moyens de contrôle (60) comprennent également une unité (55) assurant le positionnement d'au moins un capteur (54, 58) sur la surface interne de la volute (5), ainsi que sa rotation autour de l'axe (50) de révolution de la volute.

6. Dispositif conforme à l'une des revendications 1 à 5, selon lequel lesdits moyens de contrôle ou de réparation comprennent un bras télémanipulateur (30), destiné à supporter et guider des outillages.

7. Dispositif conforme à l'une des revendications 1 à 6, selon lequel les moyens (22, 23, 24) de support et de positionnement constituent une protection biologique.

8. Dispositif selon l'une des revendications 2 à 7, selon lequel les moyens de mise en rotation des tapes intermédiaire et supérieure (23, 24) sont constitués par un pignon (34, 40), mis en mouvement par un moteur (26, 27) et venant en prise avec une couronne dentée (35, 41) portée par une tape (23, 24).

9. Dispositif conforme à l'une des revendications 1 à 8, selon lequel les moyens pour déplacer la colonne (21) sur son axe (18) sont constitués par un pignon (45), mis en mouvement par un moteur (28) et venant en prise avec une crémaillère (47) portée par la colonne.

10. Procédé d'intervention au moyen du dispositif conforme à l'une des revendications 1 à 9, sur la volute (5) d'une pompe primaire, ladite pompe présentant un axe (10) et ladite volute présentant un axe (50) de révolution, ledit procédé consistant à :
- dégager l'accès à l'intérieur de la volute,
- positionner ledit dispositif d'intervention par rapport à l'axe (10) de la pompe et à l'axe (50) de révolution de la volute, la colonne (21) pénétrant à l'intérieur de la volute, son axe (18) coïncidant sensiblement avec l'axe (50) de révolution de la volute,
- inspecter les soudures grâce aux moyens de contrôle (30, 60) portés par la colonne, et
- en cas de défaut, à procéder aux réparations par l'intermédiaire des moyens (30) portés par la colonne.

11. Procédé d'intervention conforme à la revendication 10, selon lequel l'inspection des soudures est réalisée en positionnant au moins un capteur (54, 58) en regard d'une soudure (53, 52) de la volute (5), puis en faisant tourner ledit capteur (54, 58) autour dudit axe (50) de révolution de la volute.

12. Procédé d'intervention conforme à la revendication 10, selon lequel l'inspection des soudures est réalisée en deux étapes :
- on effectue tout d'abord un balayage relativement rapide de la soudure (53, 52) pour identifier les zones présentant des défauts et
- on effectue ensuite, dans chacune des zones préalablement identifiées, un deuxième balayage à une vitesse relativement lente, pour identifier et caractériser les défauts.

## Patentansprüche

1. Einrichtung zum Eingriff in ein Spiralgehäuse (5) einer Hauptkühlmittelpumpe, wobei besagtes Spiralgehäuse eine Drehachse (50) aufweist und besagte Einrichtung umfaßt:
- eine Stützkolonne (21) für Kontrollmittel oder Reparaturmittel (30, 60),
- Mittel (22, 23, 24) zum Stützen und Positionieren besagter Kolonne (21) im Verhältnis zu besagter Drehachse (50) und
- Mittel (28, 46, 47) zum Verschieben besagter Kolonne (21) auf ihrer Achse (18).

2. Einrichtung gemäß Anspruch 1, nach der besagte Mittel zum Stützen und Positionieren drei übereinandergelagerte mit abnehmenden Durchmessern und durch besagte Kolonne (21) durchquerte Dichtungen (22, 23, 24) umfassen, wobei zwei anliegende Dichtungen im Verhältnis zueinander rotierend gemäß zwei verschobenen Achsen (17, 19) angebracht sind und die Achse (18) der Kolonne (21) ebenfalls im Verhältnis zu den zwei Drehachsen (17, 19) verschoben ist.

3. Einrichtung gemäß Anspruch 2, nach der die Achse (18) besagter Kolonne (21) deutlich senkrecht zur Ebene besagter Mittel zum Stützen und Positionieren (22, 23, 24) ist.

4. Einrichtung gemäß Anspruch 1 bis 3, nach der besagte Kontrollmittel (60) wenigstens einen Sensor (54, 58) zur Erfassung eventueller Fehler umfassen.

5. Einrichtung gemäß Anspruch 4, nach der besagte Kontrollmittel (60) ebenfalls eine Einheit (55) umfassen, die die Positionierung wenigstens eines Sensors (54, 58) auf der Innenfläche des Spiralgehäuses (5) sowie ihre Rotation um die Drehachse (50) des Spiralgehäuses gewährleistet.

6. Einrichtung gemäß Anspruch 1 bis 5, nach der besagte Kontrollmittel oder Reparaturmittel einen Fernbedienungsarm (30) umfassen, der zur Stützung und Führung der Werkzeuge bestimmt ist.

7. Einrichtung gemäß Anspruch 1 bis 6, nach der die Mittel (22, 23, 24) zum Stützen und Positionieren einen biologischen Schutz bilden.

8. Einrichtung gemäß Anspruch 2 bis 7, nach der die Mittel, die die mittleren und oberen Dichtungen (23, 24) in Rotation setzen, durch ein Ritzel (34, 40) gebildet werden, das durch einen Motor (26, 27) in Bewegung gebracht wird und in einen Zahnkranz (35, 41) eingreift, der durch eine Dichtung (23, 24) getragen wird.

9. Einrichtung gemäß Anspruch 1 bis 8, nach der die Mittel zum Verschieben der Kolonne (21) auf ihrer Achse (18) durch ein Ritzel (45) gebildet werden, das durch einen Motor (28) in Bewegung gebracht wird und in eine von der Kolonne getragenen Zahnstange (47) eingreift:

10. Verfahren zum Eingriff mittels der Einrichtung gemäß Anspruch 1 bis 9 in das Spiralgehäuse (5) einer Hauptkühlmittelpumpe, wobei besagte Pumpe eine Achse (10) aufweist und besagtes Spiralgehäuse eine Drehachse (50) aufweist, wobei besagtes Verfahren besteht aus:
- Freisetzen des Zugangs zum Innern des Spiralgehäuses,
- Positionierung besagter Eingriffseinrichtung im Verhältnis zur Achse (10) der Pumpe und zur Drehachse (50) des Spiralgehäuses, wobei die Kolonne ins Innere des Spiralgehäuses eindringt, wobei seine Achse (18) deutlich mit der Drehachse (50) des Spiralgehäuses zusammenfällt,
- Überprüfung der Schweißnähte mittels von der Kolonne getragenen Kontrollmitteln (30, 60) und
- bei Fehlern, Durchführung der Reparaturen mittels der von der Kolonne getragenen Mitteln (30).

11. Verfahren zum Eingriff gemäß Anspruch 10, nach dem die Überprüfung der Schweißnähte durch Positionierung von wenigstens einem Sensor (54, 58) gegenüber einer Schweißnaht (53, 52) des Spiralgehäuses (5) realisiert wird, anschließend durch Drehen besagten Sensors (54, 58) um besagte Drehachse (50) des Spiralgehäuses.

12. Verfahren zum Eingriff gemäß Anspruch 10, nach dem die Überprüfung der Schweißnähte in zwei Stufen realisiert wird:
- zunächst führt man eine relativ schnelle Spülung der Schweißnaht (53, 52) durch, um die Fehler aufweisenden Bereiche zu identifizieren und
- man führt anschließend in jeder der zuvor identifizierten Bereiche eine zweite Spülung in relativ geringer Geschwindigkeit durch, um die Fehler zu identifizieren und zu charakterisieren.

## Claims

1. Installation for servicing the shell (5) of a coolant pump, said shell having an axis (50) of revolution and said installation comprising
- a pillar (21) for the support of checking or repairing means (30, 60)
- means (22, 23, 24) for supporting and positioning said pillar (21) with respect to said axis (50) of revolution and
- means (28, 46, 47) for moving said pillar (21) along its axis (18).

2. Installation according to claim 1, wherein said supporting and positioning means comprise three superimposed blocks (22, 23, 24), of decreasing diameters and crossed through by said pillar (21), two adjacent blocks being rotatively mounted one with respect to the other according to two shifted axes (17, 19), and the axis (18) of the pillar (21) being also shifted with respect to the two axes (17, 19) of rotation.

3. Installation according to claim 2, wherein the axis (18) of said pillar (21) is substantially perpendicular to the plane of said supporting and positioning means (22, 23, 24).

4. Installation according to one of claims 1 to 3, wherein said checking means (60) comprise at least one sensor (54, 58) for detecting possible defects.

5. Installation according to claim 4, wherein said checking means (60) comprise also a unit (55) that ensures the positioning of at least one sensor (54, 58) on the inner surface of the shell (5), as well as its rotation around the axis (50) of revolution of the shell.

6. Installation according to one of claims 1 to 5, wherein said checking or repairing means comprise a telemanipulator arm (30), provided to support and guide the toolings.

7. Installation according to one of claims 1 to 6, wherein the supporting and positioning means (22, 23, 24) form a biological protection.

8. Installation according to one of claims 2 to 7, wherein the means for rotating the intermediary and upper blocks (23, 24) are formed by a pinion (34, 40), operated by a motor (26, 27) and engaging a toothed ring (35, 41) carried by a block (23, 24).

9. Installation according to one of claims 1 to 8, wherein the means for moving the pillar (21) along its axis (18) are formed by a pinion (45), operated by a motor (28) and engaging a rack (47) carried by the pillar.

10. Method for servicing, by means of the installation according to one of claims 1 to 9, the shell (5) of a coolant pump, said pump having an axis (10) and said shell having an axis (50) of revolution, said method consisting in :
- freeing access to inside of the shell,
- positioning said servicing installation with respect to the axis (10) of the pump and to the axis (50) of revolution of the shell, the pillar (21) entering inside the shell, its axis (18) substantially coinciding with the axis (50) of revolution of the shell,
- inspecting the welds thanks to the checking means (30, 60) carried by the pillar, and
- in case of a defect, proceeding to repairs via the means (30) carried by the pillar.

11. Method for servicing according to claim 10, wherein inspecting the welds is made by positioning at least one sensor (54, 58) in front of a weld (53, 52) of the shell (5), then rotating said sensor (54, 58) around said axis (50) of revolution of the shell.

12. Method for servicing according to claim 10, wherein inspecting the welds is made in two steps :
- making first a relatively fast scanning of the weld (53,52) for identifying the zones having defects, and
- making then, in each of the preliminary identified zones, a second scanning at a relatively low speed, for identifying and characterizing the defects.
